# EUROPÄISCHE PATENTSCHRIFT

(11) **EP 2 440 900 B1**
(45) Veröffentlichungstag und Bekanntmachung des Hinweises auf die Patenterteilung: **17.04.2013**
(21) Anmeldenummer: 11720813.2
(22) Anmeldetag: 24.05.2011
(51) Int. Cl.: G01L 19/06

(54) **THERMOSCHUTZELEMENT FÜR EINEN DRUCKSENSOR**
THERMAL PROTECTION ELEMENT FOR A PRESSURE SENSOR
ÉLÉMENT DE PROTECTION THERMIQUE POUR CAPTEUR DE PRESSION

(30) Priorität: 25.05.2010 AT 8542010
(43) Veröffentlichungstag der Anmeldung: 18.04.2012
(73) Patentinhaber: Piezocryst Advanced Sensorics GmbH, 8020 Graz (AT)
(72) Erfinder: FRIEDL, Alexander, A-8045 Graz (AT); MICHELITSCH, Wolfgang, A-8041 Graz (AT)
(74) Vertreter: Babeluk, Michael
(86) Internationale Anmeldenummer: PCT/EP2011/058467
(87) Internationale Veröffentlichungsnummer: WO 2011/147829

(56) Entgegenhaltungen:
- WO-A1-2007/140641
- DE-U1- 29 716 060
- US-A1- 2004 237 629

## Beschreibung

Die Erfindung betrifft ein Thermoschutzelement, das frontseitig zum Schutz einer von Druck beaufschlagten Membran eines Drucksensors angeordnet ist.

Sensoren für die Druckmessung in heißen Prozessen, beispielsweise eingesetzt in eine Messbohrung im Brennraum einer Brennkraftmaschine, sind extremen Wärmeströmen und Druckpulsen ausgesetzt. Diese Wärmeströme führen zu sehr hohen Temperaturen im Sensor, die zu einer Verschlechterung der Messeigenschaften bzw. zur Zerstörung des Sensors führen können. Es sind daher bereits Maßnahmen bekannt geworden, die sensible Frontpartie des Sensors, insbesondere die Sensormembran, zu schützen, wobei jedoch durch die Schutzeinrichtung das Messverhalten des Sensors möglichst ungestört bleiben.

Der Membranschutz vor der Membran eines Sensors dient dazu, den Wärmeeintrag durch Wärmestrahlung und Konvektion in den Sensor zu reduzieren. Bei Ottomotoren soll durch den Thermoschutz die Flammenfront in der Schutzeinrichtung zum Erlöschen gebracht werden, um Reaktionen des Sensors auf die Verbrennung zu reduzieren. Der Schutz soll auch bei Glühzündung und klopfender Verbrennung sichergestellt sein, um auch bei diesen extremen Betriebsbedingungen eine Zerstörung des Sensors durch den besonders hohen Wärmeeintrag zu verhindern.

In diesem Zusammenhang wird in der WO 2007/140641 A1 ein Membranschutz für einen in eine Bohrung eines Einbauteils einschraubbaren, mit einer Membran im Frontbereich versehenen Sensor beschrieben, der ein Clipsystem zum inwendigen Befestigen im Frontbereich des Sensors aufweist. Ein Sensor mit einem derartigen Membranschutz lässt sich leicht in einer Messbohrung eines Einbauteils montieren, wenn der Außenradius des Membranschutzes nicht größer ist als der Außenradius des Sensors. Der Membranschutz, der eine Vielzahl von kleinen Bohrungen aufweist, um einen Kontakt mit dem zu messenden Medium herzustellen, ist mit hakenförmigen Elementen ausgestattet, die in eine innenliegende Nut im Endbereich des Sensors eingreifen. Die Bohrungen sollen einerseits mit sehr kleinem Durchmesser ausgeführt sein, um für einen ausreichenden Membranschutz zu sorgen, andererseits neigen allerdings kleine Bohrungsdurchmesser sehr rasch zur Verkokung durch Verbrennungsrückstände, wodurch das Messergebnis beeinträchtigt wird.

Aus der US 2004/0237629 A1 ist in diesem Zusammenhang ein Drucksensor mit einem Membranschutz bekannt geworden, wobei Ausführungsvarianten des Membranschutzes mit Bohrung sowie ovalen oder schlitzförmigen Öffnungen vorgestellt werden. Die schlitzförmigen Öffnungen weisen einen dreieckförmigen Querschnitt auf und sind kreuz- bzw. sternförmig angeordnet. Im letzteren Fall werden die für eine dynamische Druckmessung erforderlichen Öffnungsquerschnitte des Membranschutzes kaum erreicht, wobei weiters die spitz zulaufenden Bereiche der dreieckförmigen Öffnungsquerschnitte ebenfalls zur Rußanlagerung bzw. Verkokung neigen.

Aus der AT 002 036 U1 bzw. DE 297 16 060 U1 ist ein Drucksensor bekannt, der ein siebartiges Thermoschutzelement aufweist, welches in geringem Abstand zu einer beschichteten Sensormembran angeordnet ist. Das Thermoschutzelement weist eine Vielzahl zur Sensorachse paralleler Bohrungen auf. Gemäß einer Ausführungsvariante kann das Thermoschutzelement auch parallel oder radial angeordnete, schlitzförmige Öffnungen aufweisen.

Generell haben Thermoschutzelemente gemäß Stand der Technik mit zwei entgegenstehenden Forderungen zu kämpfen und führen zwangsweise zu einem nicht zufrieden stellenden Kompromiss.

Forderung A: Die Flammauslöschung soll auch bei hoch aufgeladenen Ottomotoren mit Glühzündung und anschließend klopfender Verbrennung ermöglicht werden. Diese Forderung kann nur durch besonders schmale Schlitze bzw. kleine Bohrungen von ≤ 0,2 mm eingehalten werden, da ein Zusammenhang zwischen Druck, Druckgradient und Lochquerschnitt zur sicheren Auslöschung der Flammenfront besteht. Bei Saugmotoren mit regulärer Verbrennung könnte der Durchmesser der Bohrung auch größer, z.B. 0,4 mm, sein.

Forderung B: Die Neigung zur Verkokung soll minimiert werden. Moderne direkt einspritzende Ottomotoren erzeugen durch lokalen Luftmangel Ruß, welcher sich an den Wänden der kleinen Bohrungen und in der Kavität zwischen Thermoschutzelement und Sensormembran ablagern kann und eine genaue Druckmessung verhindert. Diese Neigung zur Verkokung tritt besonders bei geringen Bohrungsdurchmessern auf und steht damit in Konflikt mit Forderung A.

Weiters ist zu beachten, dass zur Erzielung eines genügend großen, freien Querschnittes des Thermoschutzelementes bei einem Bohrungsdurchmesser von 0,2 mm selbst bei kleinen Sensoren mit einem freien Querschnitt von 7 mm² (entspricht einen Durchmesser von ca. 3 mm) ca. 100 Bohrungen notwendig sind, was einen sehr großen Herstellungsaufwand zur Folge hat.

Aufgabe der Erfindung ist es, ein Thermoschutzelement für einen Drucksensor zum Einsatz in Verbrennungsprozessen vorzuschlagen, der für hochdynamische Messungen geeignet ist und eine geringere Verkokungsrate aufweist wie die bekannten Thermoschutzelemente. Weiters soll die Betriebssicherheit des Thermoschutzelementes bei allen Betriebszuständen zu vertretbaren Kosten garantiert werden.

Diese Aufgabe wird erfindungsgemäß dadurch gelöst, dass das Thermoschutzelement im Bereich der Membran parallel verlaufende oder als Kreisbogensegmente ausgebildete Lamellen aufweist, die 40% bis 60% der Membranfläche abdecken, wobei sich die Querschnittshöhe der Lamellen zu deren Querschnittsbreite wie 8:1 bis 12:1 verhält.

Wesentlicher Ansatz und Unterschied zum Stand der Technik ist die Abkehr von Bohrungen und die Ausbildung von sehr dünnen, ebenen bzw. gekrümmten Lamellen bzw. Stegen. Diese lassen sich auf modernen Laserschneidmaschinen oder Mikrofräsen aus einem Stück wirtschaftlich herstellen, wobei die dazwischen liegenden Öffnungen so schmal ausgeführt werden können, dass ein Auslöschen der Flamme unter allen Betriebszuständen gewährleistet ist.

Natürlich könnten mit solchen Maschinen auch Löcher gebohrt werden, doch haben die dünnen Lamellen eine deutlich geringere Neigung zur Verkokung, da in den sich ausbildenden Belägen Scherspannungen auftreten und die Vibrationen der Lamellen dazu führen, dass die Anlagerungen abblättern.

Gemäß einer bevorzugten Ausführungsvariante kann der Abstand der einzelnen Lamellen voneinander im Wesentlichen der Querschnittsbreite der Lamellen entsprechen.

Gemäß einer weiteren Ausführungsvariante der Erfindung kann das Thermoschutzelement zur Verstärkung der Lamellenstruktur einen oder mehrere radiale Stege aufweisen, auf welchen bzw. auf welche die einzelnen Lamellen vorzugsweise im rechten Winkel zulaufen.

Schließlich ist es erfindungsgemäß auch möglich, die einzelnen Lamellen zur Sensorachse geneigt auszuführen, wobei auf deren Querschnittshöhe eine Neigung erzielt wird, die im Wesentlichen dem Abstand der Lamellen zueinander entspricht.

Die Erfindung wird im Folgenden anhand von Zeichnungen näher erläutert. Es zeigen:
- Fig. 1: ein erfindungsgemäßes Thermoschutzelement, eingesetzt in den Membrantopf eines Drucksensors im Axialschnitt;
- Fig. 2: das Thermoschutzelement gemäß Fig. 1 in einer dreidimensionalen Darstellung;
- Fig. 3: das Thermoschutzelement gemäß Fig. 1 in einer frontalen Draufsicht;
- Fig. 4: eine Ausführungsvariante des Thermoschutzelementes gemäß Fig. 3 mit einem Steg entlang des Durchmessers;
- Fig. 5: eine Ausführungsvariante des Thermoschutzelementes gemäß Fig. 3 mit gekrümmten Lamellen;
- Fig. 6: eine Variante des Thermoschutzelementes mit schräg gestellten Lamellen in einer Schnittdarstellung; sowie
- Fig. 7: das Thermoschutzelement gemäß Fig. 6 in einer frontalen Draufsicht.

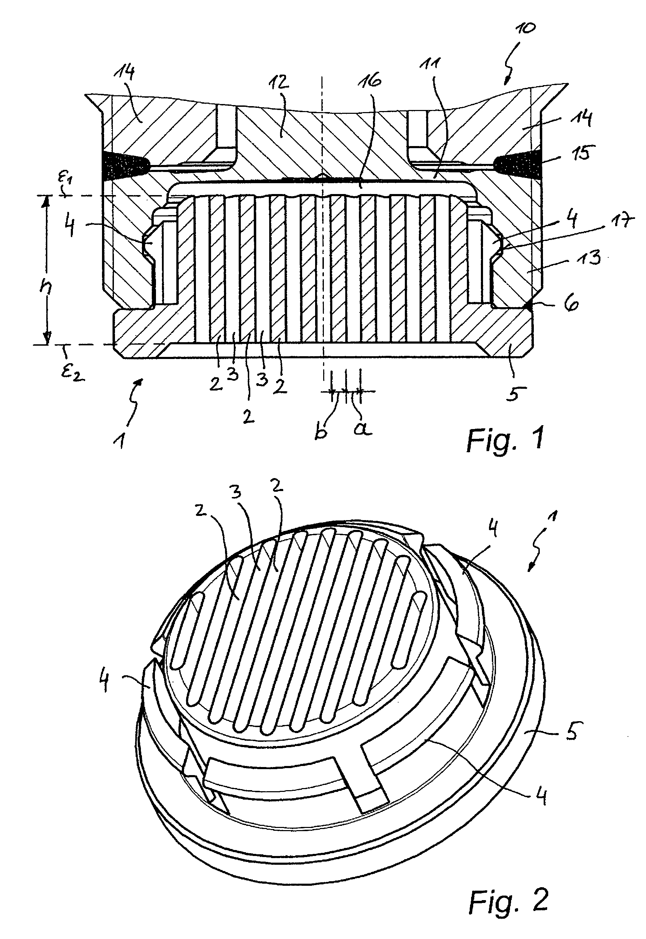

In den Figuren 1 bis 3 ist eine erste Ausführungsvariante des erfindungsgemäßen Thermoschutzelements dargestellt. In der Schnittdarstellung gemäß Fig. 1 ist das Thermoschutzelement 1 am frontseitigen Ende eines Drucksensors 10 angeordnet, von welchem nur die Frontpartie dargestellt ist. Die Sensormembran 11 des Drucksensors 10 bildet im zentralen Bereich einen Membranstempel 12 aus, welcher auf ein hier nicht weiter dargestelltes Druckmesselement, beispielsweise ein piezoelektrisches Element, wirkt. Die Membran 11 ist mit dem Gehäuse 14 des Drucksensors 10 verschweißt (siehe Schweißnaht 15), wobei ein das Thermoschutzelement 1 aufnehmender Membrantopf 13 ausgebildet ist.

Das Thermoschutzelement 1 weist im Bereich der Sensormembran 11 schmale, parallel verlaufende Lamellen 2 auf, die ca. 40% bis 60% der Membranfläche abdecken, wobei sich die Querschnittshöhe h der Lamellen 2 zu deren Querschnittsbreite b im Bereich von 8:1 bis 12:1 verhält. Damit kann auch bei extremen Betriebsverhältnissen ein wirksames Erlöschen der Flammenfront erreicht werden.

Zwischen dem Thermoschutzelement 1 und der Oberfläche der Sensormembran 11 ist eine Kavität 16 ausgebildet, deren Spaltbreite im Wesentlichen dem Abstand a der einzelnen Lamellen 2 im Bereich von ca. 0,5 mm bis unter 0,25 mm entspricht.

Im dargestellten Beispiel entspricht der Abstand a der einzelnen Lamellen 2 voneinander bzw. die Breite der länglichen Öffnungen 3 im Wesentlichen der Querschnittsbreite b der Lamellen, so dass ein Bedeckungsgrad der Membran 11 von ca. 50% erreicht wird.

Am äußeren Umfang des Thermoschutzelements 1 sind erfindungsgemäß Haltemittel 4 angeordnet, die federnd am inneren Umfang des Membrantopfs 13 des Drucksensors 1 anliegen. Die Haltemittel 4 können reibschlüssig anliegen oder auch - wie in Fig. 1 dargestellt - in eine Nut 17 am inneren Umfang des Membrantopfes 13 einrasten.

Die Haltemittel 4 des erfindungsgemäßen Thermoschutzelementes 1 sind platzsparend zwischen zwei die Höhe h der Lamellen 2 begrenzenden Ebenen ε₁, ε₂ angeordnet, und ragen nicht über den Körper des Thermoschutzelementes hinaus wie beispielsweise beim Membranschutz gemäß WO 2007/140641 A1.

Das Thermoschutzelement 1 weist am äußeren Umfang einen Halteflansch 5 auf, der am stirnseitigen Ende des Membrantopfes 13 des Drucksensors 1 anliegt, wobei der Halteflansch 5 ggf. auch mit dem stirnseitigen Ende des Membrantopfes 13 verschweißt sein kann (siehe Schweißstellen 6 in Fig. 1).

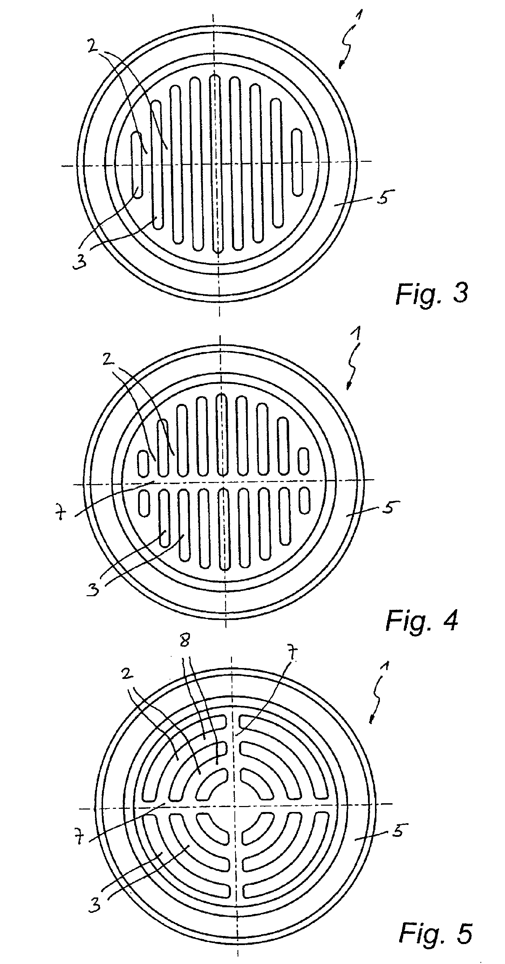

Gemäß einer in Fig. 4 dargestellten Ausführungsvariante kann das Thermoschutzelement 1 einen oder mehrere radiale Stege 7 aufweisen, auf welchen bzw. auf welche die einzelnen Lamellen 2 vorzugsweise im rechten Winkel zulaufen. Fig. 4 zeigt einen entlang des Durchmessers verlaufenden radialen Steg 7, welcher zur Versteifung der Lamellen 2 des Thermoschutzelementes dient. Derartige radiale Stege 7 können auch in Kreuzform oder anderen Geometrien angeordnet sein.

So ist in Fig. 5 eine Ausführungsvariante des Thermoschutzelementes 1 dargestellt, bei welcher die Lamellen 2 gestützt durch kreuzförmig angeordnete Stege 7 als Kreisbogensegmente 8 ausgeführt sind.

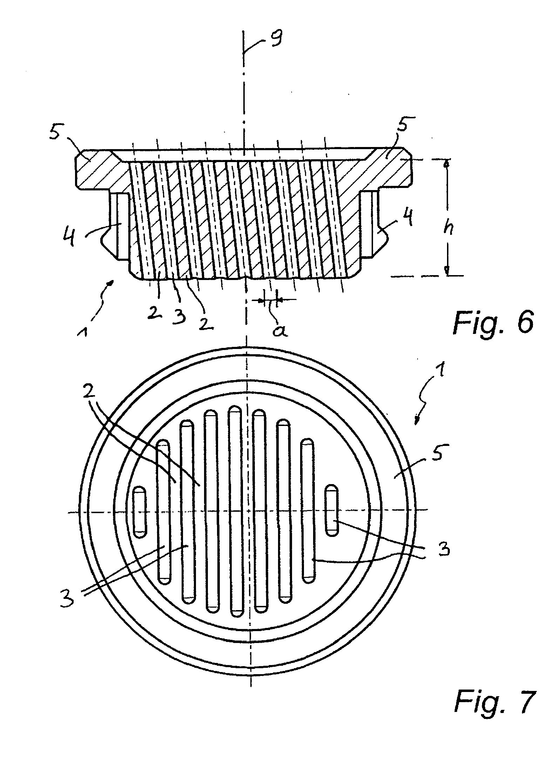

Die Ausführungsvariante gemäß Fig. 6 und Fig. 7 zeigt ein Thermoschutzelementes 1, bei welchem die einzelnen Lamellen 2 zur Sensorachse 9 geneigt ausgeführt sind und auf deren Querschnittshöhe h eine Neigung aufweisen, die im Wesentlichen dem Abstand a der Lamellen 2 zueinander entspricht. Durch diese Maßnahme wird die Oberfläche der Sensormembran bei einer parallel zur Sensorachse 9 einfallenden Wärmestrahlung durch die schräg stehenden Lamellen 2 zur Gänze abgeschattet.

## Patentansprüche

1. Thermoschutzelement (1), das frontseitig zum Schutz einer von Druck beaufschlagten Membran (11) eines Drucksensors (10) angeordnet ist, **dadurch gekennzeichnet, dass** das Thermoschutzelement (1) im Bereich der Sensormembran (11) parallel verlaufende oder als Kreisbogensegmente (8) ausgebildete Lamellen (2) aufweist, die 40% bis 60% der Membranfläche abdecken, wobei sich die Querschnittshöhe (h) der Lamellen (2) zu deren Querschnittsbreite (b) wie 8:1 bis 12:1 verhält.

2. Thermoschutzelement (1) nach Anspruch 1, **dadurch gekennzeichnet, dass** der Abstand a der einzelnen Lamellen (2) < 0,5mm, vorzugsweise < 0,25mm, ist.

3. Thermoschutzelement (1) nach Anspruch 1 oder 2, **dadurch gekennzeichnet, dass** der Abstand (a) der einzelnen Lamellen (2) zueinander im Wesentlichen der Querschnittsbreite (b) der Lamellen (2) entspricht.

4. Thermoschutzelement (1) nach einem der Ansprüche 1 bis 3, **dadurch gekennzeichnet, dass** die einzelnen Lamellen (2) zur Sensorachse (9) geneigt ausgeführt sind und auf deren Querschnittshöhe (h) eine Neigung aufweisen, die im Wesentlichen dem Abstand (a) der Lamellen (2) zueinander entspricht.

5. Thermoschutzelement (1) nach einem der Ansprüche 1 bis 3, **dadurch gekennzeichnet, dass** das Thermoschutzelement (1) einen oder mehrere radiale Stege (7) aufweist, auf welchen bzw. auf welche die einzelnen Lamellen (2) vorzugsweise im rechten Winkel zulaufen.

6. Thermoschutzelement (1) nach einem der Ansprüche 1 bis 5, **dadurch gekennzeichnet, dass** am äußeren Umfang des Thermoschutzelementes (1) Haltemittel (4) angeordnet sind, die federnd am inneren Umfang eines Membrantopfes (13) des Drucksensors (10) anliegen.

7. Thermoschutzelement (1) nach Anspruch 6 **dadurch gekennzeichnet, dass** die Haltemittel (4) in eine Nut (17) am inneren Umfang des Membrantopfes (13) einrasten.

8. Thermoschutzelement (1) nach Anspruch 6 oder 7, **dadurch gekennzeichnet, dass** die Haltemittel (4) zwischen zwei die Höhe h der Lamellen begrenzenden Ebenen (ε₁, ε₂) angeordnet sind.

9. Thermoschutzelement (1) nach Anspruch 1 bis 8, **dadurch gekennzeichnet, dass** am äußeren Umfang des Thermoschutzelementes (1) ein Halteflansch (5) ausgebildet ist, der am stirnseitigen Ende eines Membrantopfes (13) des Drucksensors (10) anliegt.

10. Thermoschutzelement (1) nach Anspruch 9, **dadurch gekennzeichnet, dass** der Halteflansch (5) des Thermoschutzelementes (1) mit dem stirnseitigen Ende des Membrantopfes (13) verschweißt ist.

11. Thermoschutzelement (1) nach Anspruch 1 bis 10, **dadurch gekennzeichnet, dass** das Thermoschutzelement (1) einstückig durch Mikrofräsen oder Laserschneiden hergestellt ist.

## Claims

1. A thermal protection element (1), which is arranged on the front side for the protection of a membrane (11) of a pressure sensor (10) that is subjected to pressure, **characterised in that** the thermal protection element (1) comprises lamellae (2) in the region of the senor membrane (11), which lamellae extend in parallel or are arranged as circular arc segments (8) and cover 40% to 60% of the membrane surface, with the ratio between the cross-sectional height (h) of the lamellae (2) and the cross-sectional width (b) thereof being 8:1 to 12:1.

2. A thermal protection element (1) according to claim 1, **characterised in that** the distance (a) of the individual lamellae (2) is < 0.5 mm, preferably < 0.25 mm.

3. A thermal protection element (1) according to claim 1 or 2, **characterised in that** the distance (a) of the individual lamellae (2) from each other substantially corresponds to the cross-sectional width (b) of the lamellae (2).

4. A thermal protection element (1) according to one of the claims 1 to 3, **characterised in that** the individual lamellae (2) are arranged obliquely in relation to the sensor axis (9) and have an inclination at their cross-sectional height (h) which substantially corresponds to the distance (a) of the lamellae (2) from each other.

5. A thermal protection element (1) according to one of the claims 1 to 3, **characterised in that** the thermal protection element (1) comprises one or several radial webs (7), with the individual lamellae (2) approaching said web or webs preferably at a right angle.

6. A thermal protection element (1) according to one of the claims 1 to 5, **characterised in that** holding means (4) are arranged on the outer circumference of the thermal protection element (1), which holding means rest resiliently on the inner circumference of a membrane cup (13) of the pressure sensor (10).

7. A thermal protection element (1) according to claim 6, **characterised in that** the holding means (4) latch into a groove (17) on the inner circumference of the membrane cup (13).

8. A thermal protection element (1) according to claim 6 or 7, **characterised in that** the holding means (4) are arranged between two planes (ε₁, ε₂) which delimit the height (h) of the lamellae.

9. A thermal protection element (1) according to claim 1 to 8, **characterised in that** a holding flange (5) is arranged on the outside circumference of the thermal protection element (1), which holding flange rests on the face end of a membrane cup (13) of the pressure sensor (10).

10. A thermal protection element (1) according to claim 9, **characterised in that** the holding flange (5) of the thermal protection element (1) is welded together with the face end of the membrane cup (13).

11. A thermal protection element (1) according to claim 1 to 10, **characterised in that** the thermal protection element (1) is produced integrally by micromilling or laser cutting.

## Revendications

1. Elément de protection thermique (1) monté frontalement pour la protection d'une membrane (11) d'un capteur de pression (10) sollicité en pression,
**caractérisé en ce que**
l'élément de protection thermique (1) comporte, dans la zone de la membrane de capteur (11) des lamelles (2) s'étendant parallèlement ou réalisées sous la forme de segments d'arcs de cercle (8) qui recouvrent 40 à 60 % de la surface de la membrane, le rapport de la hauteur (h) de la section des lamelles (2) et de la largeur (b) de cette section étant de 8:1 à 12:1.

2. Elément de protection thermique (1) conforme à la revendication 1,
**caractérisé en ce que**
la distance (a) entre les différentes lamelles (2) est < 0,5 mm, de préférence < 0,25 mm.

3. Elément de protection thermique (1) conforme à la revendication 1 ou 2,
**caractérisé en ce que**
la distance (a) entre les différentes lamelles (2) correspond essentiellement à la largeur (b) de la section de ces lamelles (2).

4. Elément de protection thermique (1) conforme à l'une des revendications 1 à 3,
**caractérisé en ce que**
les différentes lamelles (2) sont inclinées par rapport à l'axe (9) du capteur et présentent sur la hauteur (h) de leur section une inclinaison qui correspond essentiellement à la distance (a) entre les lamelles (2).

5. Elément de protection thermique (1) conforme à l'une des revendications 1 à 3,
**caractérisé en ce que**
l'élément de protection thermique (1) comporte au moins une barrette radiale (7) vers laquelle s'étendent les différentes lamelles (2) de préférence à angle droit.

6. Elément de protection thermique (1) conforme à l'une des revendications 1 à 5,
**caractérisé en ce que**
sur la périphérie externe de l'élément de protection thermique (1) sont montés des moyens de retenue (4) qui s'appliquent élastiquement contre la périphérie interne d'un tronçon en forme de pot (13) de la membrane du capteur de pression (10).

7. Elément de protection thermique (1) conforme à la revendication 6,
**caractérisé en ce que**
l'élément de retenue (4) s'encliquette dans une rainure (17) située à la périphérie interne du tronçon en forme de pot (13) de la membrane.

8. Elément de protection thermique (1) conforme à la revendication 6 ou 7,
**caractérisé en ce que**
les moyens de retenue (4) sont montés entre deux plans (ε₁, ε₂) délimitant la hauteur (h) des lamelles.

9. Elément de protection thermique (1) conforme à la revendication 1 à 8,
**caractérisé en ce qu'**
à la périphérie externe de l'élément de protection thermique (1) est formée une bride de retenue (5) qui s'applique contre l'extrémité frontale du tronçon en forme de pot (13) de la membrane du capteur de pression (10).

10. Elément de protection thermique (1) conforme à la revendication 9,
**caractérisé en ce que**
la bride de retenue (5) de l'élément de protection thermique (1) est soudée avec l'extrémité frontale du tronçon en forme de pot (13) de la membrane.

11. Elément de protection thermique (1) conforme à la revendication 1 à 10,
**caractérisé en ce que**
l'élément de protection thermique (1) est réalisé en une seule pièce par micro fraisage ou découpe au laser.
